# EUROPEAN PATENT APPLICATION

(11) **EP 0 806 718 A1**
(43) Date of publication of application: **12.11.1997**
(21) Application number: 97303031.5
(22) Date of filing: 02.05.1997
(51) Int. Cl.: G05D 7/00, F02M 65/00, G01F 25/00, F16K 37/00

(54) **Apparatus for calibrating a flow control device**

(30) Priority: 03.05.1996 GB 9609384
(71) Applicant: LUCAS INDUSTRIES public limited company, Solihull, B90 4LA (GB)
(72) Inventor: Bussey, Stephen, Downhead Park, Milton Keynes, MK15 9BT (GB); Evett, James William, Winslow, Bucks MK18 3JD (GB); Hall,Adrian, Greatworth, Banbury Oxon OX17 2DR (GB)
(74) Representative: Robinson, John Stuart

(57) **Abstract**

In order to calibrate a flow control device such as a petrol injector (1), the flow through the device (1) is measured by a flow meter (4). A reference signal generator (12) generates a reference signal whose frequency is equal to that of the flow meter output for a calibration flow rate. A frequency differencer (11) forms an error signal whose frequency is equal to the difference between the frequencies of the flow meter output and the reference signal. A driver (13, 17) drives a stepper motor (5) at a frequency proportional to the error signal frequency. The stepper motor (5) adjusts the flow through the device (1) until the calibration flow rate is achieved.

## Description

The present invention relates to an apparatus for controlling calibration of a flow control device, such as fuel injector for an internal combustion engine, and to an apparatus for calibrating a flow control device.

A known type of fuel injector for an internal combustion engine comprises a solenoid whose armature is a ferromagnetic disc which is spring-loaded against a valve seat. In order to inject fuel, the solenoid is energised and pulls the disc away from the valve seat so as to permit the flow of fuel. The spring-loading is provided by a helical compression spring which acts against a slug.

Fuel injectors of this type require dynamic calibration at the end of the manufacturing process. In particular, the flow rate provided by such an injector during operation is calibrated by moving the slug so as to adjust the preload provided by the spring. A known calibration technique uses a flow meter to measure the flow rate through the injector while the injector is repeatedly operated by supplying a suitable signal to the solenoid. A stepper motor is connected via a lead screw to a rod which moves the slug within the injector body. The output of the flow meter is sampled and discrete stepwise iterative adjustments are made to the position of the slug until the flow rate is within an acceptable range of a calibration flow rate corresponding to the signal supplied to the injector.

Although such a system is reliable and effective, it is relatively time consuming. The large step movements of the slug cause large disturbances in the flow measurements as movement of the adjuster displaces fluid so that sufficient settling time must be allowed between consecutive measurements to allow the flow rate to stabilise before an accurate flow rate measurement following adjustment can be made. It is desirable to reduce the cycle time so as to minimise the number of calibration machines required at the end of a production line.

According to a first aspect of the invention, there is provided an apparatus for controlling calibration of a flow control device by a flow meter for supplying an output signal which represents the flow rate of the device and a flow rate adjuster driven by a motor, the apparatus comprising a reference signal generator for generating a reference signal corresponding to the output signal of the flow meter for a predetermined flow rate, a comparator for providing an error signal which is substantially equal to the difference between the reference signal and the flow meter output signal, and a driver for driving the motor at a speed which is a function of the error signal.

Preferably the motor is a stepper motor and the driver is arranged to drive the stepper motor at a frequency which is a function of the error signal. Preferably the frequency of the flow meter output signal represents the flow rate of the device, the reference signal has a frequency substantially equal to the frequency of the output signal of the flow meter for the predetermined flow rate, the comparator comprises a frequency differencer and the error signal has a frequency substantially equal to the difference between the frequency of the reference signal and the frequency of the flow meter output signal, and the driver is arranged to drive the stepper motor at a frequency which is a function of the frequency of the error signal.

Although such an apparatus may be used for calibrating any type of flow control device whose flow rate may be adjusted (including valves intended to supply either gas or liquid media), it is particularly useful for calibrating fuel injectors at the end of a production line.

The driver may be arranged to drive the stepper motor at a frequency which is proportional to the frequency of the error signal. The constant of proportionality may be selectable so as to provide different effective gains. For instance, the driver may include a frequency divider whose division ratio is selectable. During an initial phase of calibration, the gain may be relatively high so that the predetermined flow rate is approached relatively quickly. After a predetermined time or when the actual flow rate is within a predetermined range of the predetermined flow rate, the division ratio may be increased so as to reduce the effective loop gain of the system, for instance so that the predetermined flow rate is approached stably and with little or no overshoot.

The frequency differencer may comprise a phase sensitive detector, for instance in the form of a D-type bistable circuit whose output frequency is proportional to the difference between its data and clock inputs.

A frequency comparator may be provided for comparing the frequency of the flow meter output signal and the frequency of the reference signal so as to supply a motor direction signal to the driver. The frequency comparator may comprise a clock, first and second counters having clock inputs connected to the clock and being arranged to be gated by the flow meter output signal and the reference signal, respectively, and a digital comparator for comparing the contents of the first and second counters, which contents relate to the periods of the flowmeter and reference signals.

According to a second aspect of the invention, there is provided an apparatus for calibrating a flow control device, comprising an apparatus in accordance with the first aspect of the invention, a flow meter for supplying an output signal which represents the flow rate of the device and a flow rate adjuster driven by a motor.

It is thus possible to provide a technique which reduces the time for each flow control device, such as a fuel injector, to be calibrated. By substantially continuously adjusting the flow rate during calibration, transient displacement disturbances due to step changes are removed and the remaining displacement disturbances vary in a continuous manner which reduces as the predetermined flow rate is approached. It is thus possible to provide a closed loop control system of the frequency-locked type which allows the flow rate to be adjusted relatively quickly to the predetermined flow rate. Thus, in production line manufacture of fuel injectors, the speed of production may be increased and/or the number of calibration stations may be reduced so that the cost of manufacture is substantially reduced.

The invention will be further described, by way of example, with reference to the accompanying drawings, in which:
Figure 1 is a schematic diagram of an apparatus for calibrating a petrol injector constituting an embodiment of the invention;
Figure 2 is a block circuit diagram of a controller of the apparatus of Figure 1;
Figure 3 is a graph of flow rate against time illustrating the operation of the apparatus of Figure 1;
Figure 4 is a schematic diagram of a known type of flow meter;
Figure 5 is a schematic diagram of an apparatus for calibrating a petrol injector constituting another embodiment of the invention;
Figure 6 is a block diagram of a data processor of the apparatus of Figure 5; and
Figure 7 is a diagram illustrating waveforms appearing in the apparatus of Figure 5.

Like reference numerals refer to like parts throughout the drawings.

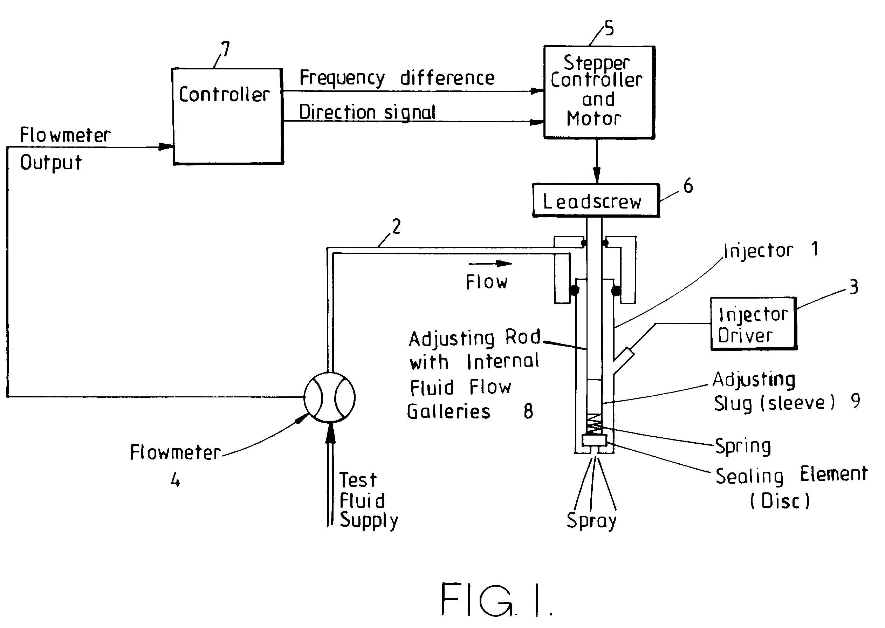

The apparatus shown in Figure 1 is for use at a calibration station at the end of a petrol injector production line. A petrol injector 1 is connected via a duct 2 to a test fluid supply system for supplying the test fluid, which may be petrol or may be another fluid, at a predetermined pressure. The injector 1 contains a solenoid for opening the injector and this solenoid is connected to an output of an injector driver 3. The signal supplied by the driver 3 to the injector 1 is such as to cause the injector 1 to operate at a standard duty cycle (e.g. 2.5 mS open in a 20 mS cycle) at which, when calibrated, the injector 1 is required to provide a predetermined fluid flow rate. The actual fluid flow rate is measured by a flow meter 4 which supplies an output signal whose frequency is a function of the actual flow rate. For instance, the frequency of the output signal of the flow meter 4 may be proportional to the actual flow rate. The output signal is supplied to a controller 7, which has an output suitable for driving a stepper motor controller and stepper motor 5. The mechanical output of the stepper motor controller and stepper motor 5 is connected to a lead screw 6 whose output provides linear movement of an adjuster rod 8 for moving an adjuster slug 9 within the injector 1.

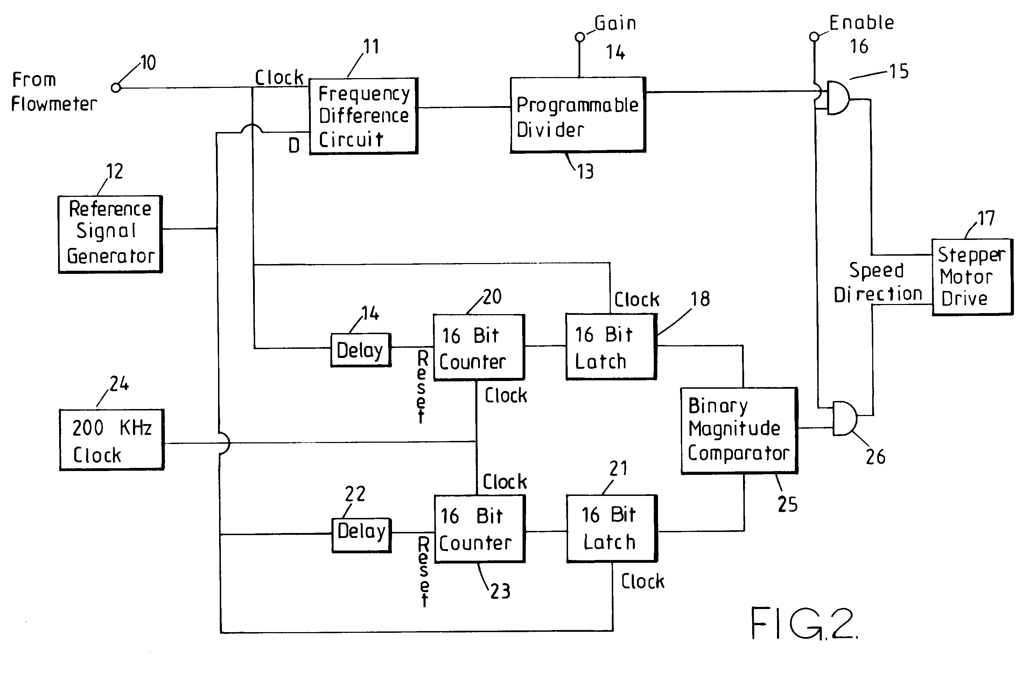

Part of the controller 7 for controlling the stepper motor controller and stepper motor 5 is shown in more detail in Figure 2. The controller has an input 10 for receiving the output signal of the flow meter 4. The input 10 is connected to one input of a frequency difference circuit 11, whose other input is connected to the output of a reference signal generator 12 which generates a reference signal whose frequency is equal to the frequency of the flow meter output signal corresponding to the predetermined calibration flow rate. The circuit 11 comprises a frequency sensitive detector, for instance in the form of a D-type bistable whose clock input is connected to the input 10 and whose data input is connected to the output of the reference signal generator 12.

The output of the circuit 11 is connected to the input of a programmable divider 13. The divider 13 has a division ratio which is controlled by a suitable signal supplied to a gain control input 14. For instance, the divider may be effectively disabled so as to pass pulses without frequency division to provide a high loop gain mode of operation. The divider is enabled to divide the pulses by a predetermined division ratio when a suitable signal is supplied to the input 14. Alternatively, the divider 13 may be of a known type in which the division ratio is set in accordance with digital signals supplied to the input 14.

The output of the divider 13 is supplied to a first input of a gate 15 whose second input is connected to an enable input 16. The gate 15 thus blocks the pulses from the divider 13 until an enable signal is supplied to the input 16. The output of the gate 15 is connected to a step control input of a stepper motor driver 17.

The input 10 is connected to the clock input of a sixteen bit latch 18 and, via a delay circuit 19, to the reset input of a sixteen bit binary counter 20. The binary stage outputs of the counter 20 are connected to corresponding parallel inputs of the latch 18. Similarly, the output of the reference signal generator 12 is connected to the clock input of a sixteen bit latch 21 and via a delay circuit 22 to the reset input of a sixteen bit counter 23 whose outputs are connected to the inputs of the latch 21. The clock inputs of the counters 20 and 23 are connected to a 200 kHz clock 24.

The parallel outputs of the latches 18 and 21 are connected to respective inputs of a binary magnitude comparator 25. The comparator compares the contents of the latches 18 and 21 and supplies at its output a signal indicative of which of the latches contains the larger number. The output of the comparator 25 is connected to a first input of a gate 26, whose second input is connected to the enable input 16. The output of the gate 26 is connected to a direction control input of the stepper motor driver 17. The gate 26 thus supplies a direction control signal when an enable signal is supplied to the enable input 16.

The reference signal generator 12 supplies a reference signal whose frequency or repetition rate is equal to the output signal frequency of the flow meter 4 when a predetermined calibration flow rate is being measured. The output frequency of the generator 12 may be fixed or may be selectable so as to permit calibration of different types of injectors or calibration of one type of injector for different applications. When the controller is enabled by the supply of an enable signal to the input 16, the circuit 11 supplies an output signal whose frequency is equal to the difference between the frequencies of the flow meter output signal and the reference signal. This error signal is supplied via the programmable divider 13 and the gate 15 to the stepper motor driver 17. Accordingly, the stepper motor speed is substantially directly proportional to the difference between the frequencies of the flow meter output signal and the reference signal provided by the generator 12. For relatively large differences between the actual and predetermined flow rates, the frequency difference is relatively high so that the stepper motor speed is relatively high and causes rapid continuous adjustment towards the predetermined flow rate. As the flow rate approaches the predetermined flow rate, the frequency difference reduces so that the stepper motor speed similarly reduces. The controller thus acts as a frequency-locked loop which substantially continuously adjusts the flow rate. Because of the continuous adjustment of the flow rate, the flow rate measurements made by the flow meter 4 are not subjected to substantial disturbances but follow the actual flow rate sufficiently rapidly to provide stable closed loop calibration adjustment of the injector.

The loop gain can be adjusted by adjusting the division ratio of the divider 13. For instance, during an initial time period of the calibration procedure or until the actual flow rate approaches the predetermined flow rate to within a desired tolerance, the gain may be set relatively high by providing a relatively low division ratio or by disabling the divider 13. During a subsequent phase, the divider 13 may be enabled or the division ratio increased so as to reduce the loop gain. This allows relatively rapid convergence towards the predetermined flow rate during the initial phase but, in order to ensure stability and reliable convergence to the predetermined flow rate, the loop gain is reduced during the later phase.

Continuous control of the stepper motor can be inhibited by removing the enable signal from the input 16 after the predetermined flow rate has been achieved. This allows the flow rate to be verified without the adjusting rod 8 moving.

The stepper motor controller may contain a device which varies the steps per revolution of the stepper motor, for instance between 200 and 25,000 steps per revolution. This allows optimisation of the pulse rate to minimise setting time.

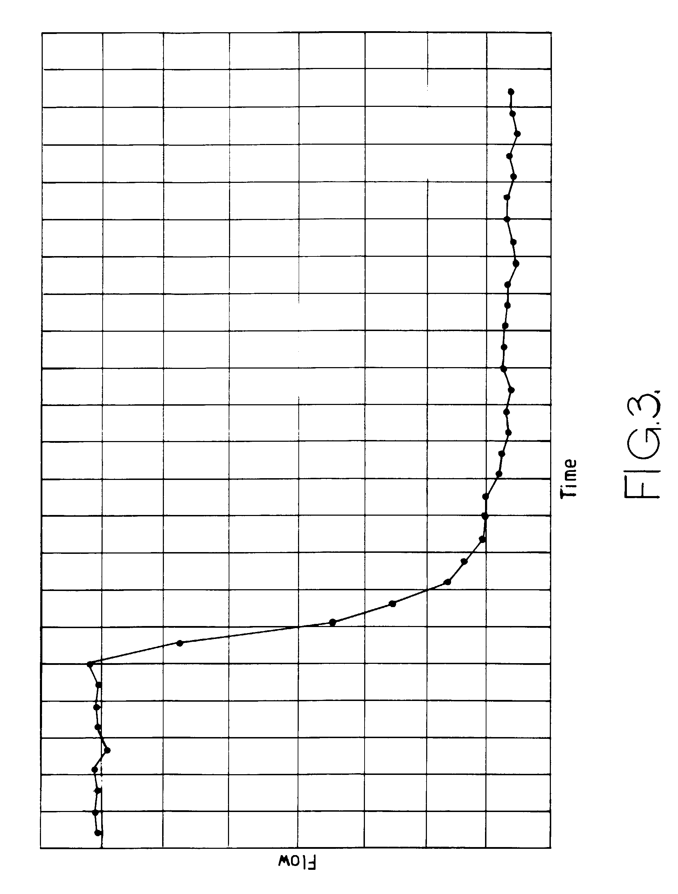

Figure 3 illustrates the calibration of one sample of a petrol injector using the apparatus described hereinbefore. The predetermined or desired calibrated flow rate is between 0.18 and 0.19 grams per second but the adjuster slug is initially positioned to provide a much higher flow rate, in this case approximately 0.25 grams per second. The dots on the curve indicate specific measurements which were recorded during the procedure.

The calibration procedure starts at zero on the time axis and, as can be seen from the curve, the calibration flow rate is approached very rapidly.

In order to determine the end of the calibration procedure, the measured flow rate may be compared with the predetermined flow rate such that, when it is within an acceptable range, for instance 0.5%, of the predetermined flow rate, calibration is ceased. Alternatively, consecutive pairs of sampled measurements may be made and calibration may be stopped when two consecutive measurements are within a predetermined range of each other or after a predetermined time interval.

Using any of these tests or any combination to determine when to stop calibration would have resulted in calibration being completed within a short time. However, the apparatus was allowed to continue with the calibration procedure and the relatively horizontal portion of the curve after setting illustrates the stability of the control system.

This technique may be used to calibrate flow control devices which require rotary adjustment, for instance by replacing the leadscrew 6 with a screwdriver.

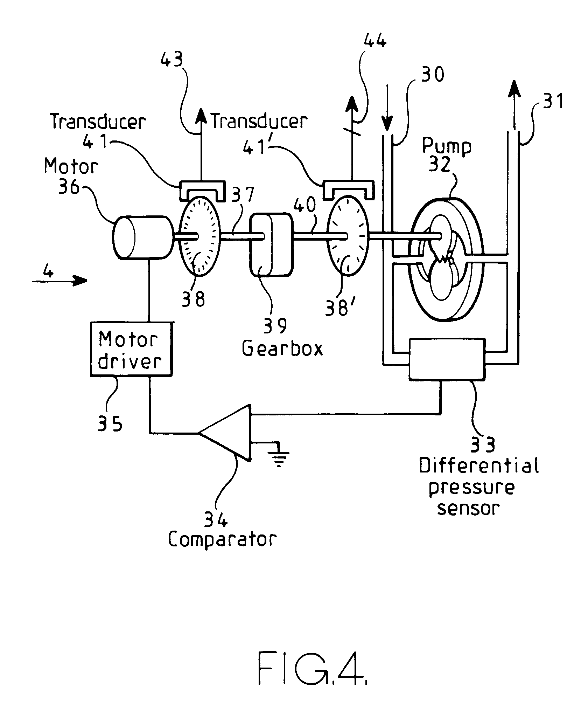

Figure 4 shows a particular type of flow meter 4 which may be used in the apparatus shown in Figure 1. The flow meter has an inlet 30 and an outlet 31 connected to the inlet and outlet, respectively, of a positive displacement pump 32 illustrated as a gear pump. The inlet 30 and the outlet 31 are also connected to a differential pressure sensor 33 which supplies at its output a signal representing the difference between the pressures at the inlet 30 and the outlet 31.

The output of the sensor 33 is connected to a first input of a comparator 34 whose other input is shown connected to an earthed reference line. In practice, the second input is connected to receive a voltage which corresponds to a signal from the sensor 33 which occurs when the pressure in the inlet 30 is equal to the pressure in the outlet 31. The output of the comparator 34 is connected to the input of a motor driver 35 whose output is connected to a motor 36. The motor 36 has a shaft 37 connected to a wheel 38 and to the input shaft of a reduction gearbox 39. The output shaft 40 of the gearbox 39 is connected to another wheel 38' and to the pump 32 so that the motor 36 drives the pump 32 via the reduction gearbox 39. A transducer 41 is associated with the wheel 38 and is connected to a line 43 whereas another transducer 41' is associated with the wheel 38' and is connected to a set of lines 44.

In use, a liquid flow is supplied to the inlet 30 and creates a pressure difference across the sensor 33. The comparator 34 forms an error signal as the difference between the output signal of the sensor 33 and the reference signal. The driver 35 converts the error signal to a suitable drive signal for the motor 36, which drives the pump 32 via the gearbox 39 so as to reduce the pressure difference across the sensor 33 substantially to zero. The pump 32 therefore operates at a speed which corresponds to the fluid flow to be measured.

The speed of the pump 32 and hence of the motor shaft 37 is substantially directly proportional to the flow rate being measured by the flow meter. The wheel 38 and the transducer 41 operate as a tachometer to provide an output signal on the line 43 comprising a sequence of pulses whose repetition rate is directly proportional to the speed of the shaft 37 and hence to the flow rate. For instance, the wheel 38 may comprise an optically opaque material having equiangularly spaced apertures and the transducer 41 may comprise a source of optical radiation, such as visible light or infrared radiation, and a corresponding transducer disposed on opposite sides of the wheel 38 so that the apertures pass between the source and the sensor. The transducer 41' cooperates with the wheel 38' to provide one or more additional datum outputs for indicating the position of the shaft 40 and hence the phase or position within the cycle of operation of the flow meter. For instance, the transducer 41' may cooperate with apertures at different radial distances from the centre of the wheel 38'.

For a given constant flow rate, the frequency or repetition rate of the output pulses of the flow meter should be constant and the gaps between consecutive pulses should be identical throughout the cycle of operation of the flow meter. However, in practice, the interpulse periods vary cyclicly and such variation gives rise to flow rate measurement inaccuracies which become more significant for lower flow rates.

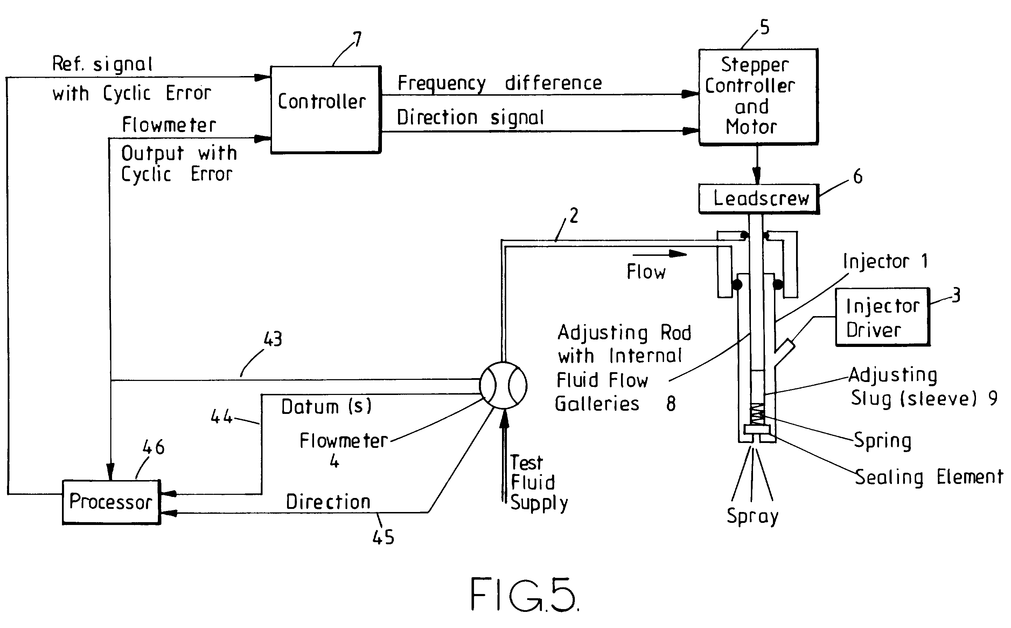

Figure 5 illustrates an arrangement for reducing or eliminating the inaccuracies caused by the cyclic measurement variations in the flow rate output signal. The flow meter 4 is of the type shown in Figure 4 and supplies a flow rate output signal on the line 43, a plurality of datum signals on the set of lines 44, and a flow direction signal on a line 45. As will be clear from Figure 4, if the motor 36 is capable of being driven in both directions of rotation by the motor driver 35, then a flow rate from the outlet 31 to the inlet 30 can also be measured.

The line 43 is connected to the controller 7 as in Figure 1. However, a data processor 46 is provided in the apparatus shown in Figure 1 and replaces the reference signal generator 12 shown in Figure 2. The processor 46 is connected to the lines 43 to 45 from the flow meter 4 and supplies a reference signal incorporating the cyclic variation of the flow meter 4 to the controller 7.

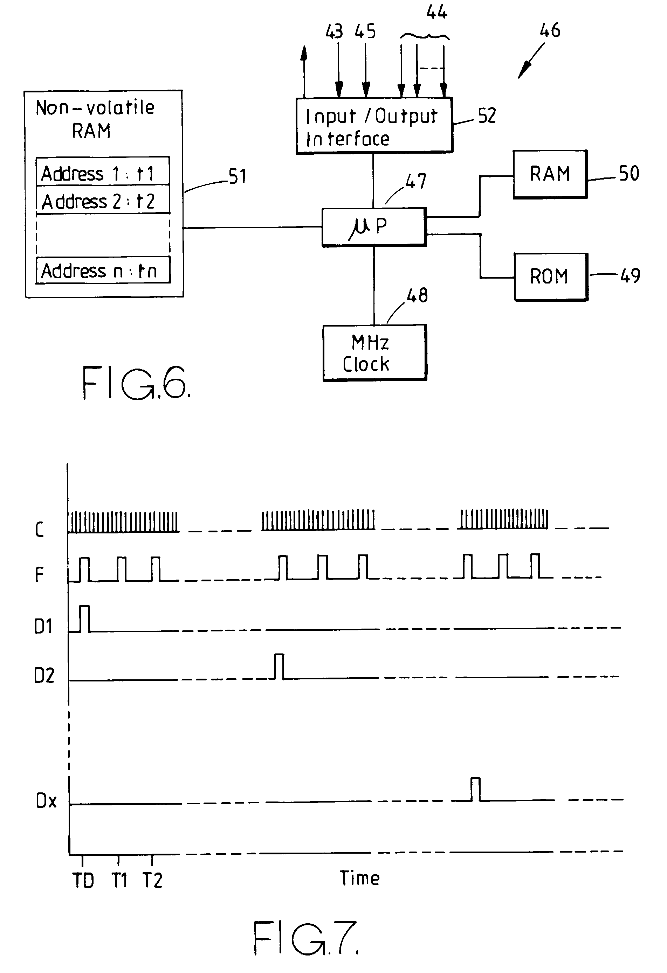

The processor 46 is shown in more detail in Figure 6 and comprises a microprocessor 47 provided with a clock 48 which produces high precision clock pulses in the megahertz region. A read-only memory 49 contains a program for controlling the microprocessor 47 and a random access memory 50 provides temporary storage for use during operation of the processor. The data processor further comprises a non-volatile random access memory 51 which has n address locations for storing values representing inter-pulse time intervals, where n is the number of pulses produced on the line 43 by the flow meter 4 for each cycle of operation thereof. An input/output interface 52 is provided for communication between the microprocessor 47 and the remainder of the apparatus shown in Figure 5. The lines 44 supply respective datum signals from the flow meter 4 to the interface 52, where the number of lines 44 is equal to the number of datum pulses per cycle of operation of the flow meter 4.

In order to calibrate the flow meter 4, a fluid flow at a rate equal to the predetermined flow rate is supplied through the flow meter with the controller 7 disconnected from the stepper controller and motor 5. The clock 48 supplies the precision clock pulses shown at C in the waveform diagram of Figure 7 whereas the line 43 supplies the pulses from the transducer 41 as shown at F in Figure 7. The first datum pulse D1 is produced at a time T0 in synchronism with one of the pulses F. The rising edge of the pulse D1 starts a counter within the microprocessor 47 which counts the clock pulses C until the rising edge of the next pulse F at time T1. The count is stored at address 1 in the memory 51. Thus, the count indicated as t1 at address 1 in the memory 51 accurately represents the time interval between the rising edges of the first two pulses F shown in Figure 7. This process is then repeated for the interpulse interval t2 between the second and third pulses F shown in Figure 7. This process is completed when all of the interpulse intervals for a complete flow meter cycle have been measured and recorded at addresses 1 to n.

Figure 7 also shows the timing of the other datum pulses D2...Dx, where x is the number of datum pulses per cycle of flow meter operation. Thus, at the end of the calibration phase, the individual time intervals between consecutive pulses for a complete flow meter cycle have been recorded. The number x of datum pulses is arranged to be far fewer than the number F of pulses.

During operation of the apparatus shown in Figure 5, the microprocessor 47 takes each of the measured time periods t1, t2...tn in turn and uses these to reconstruct a sequence of pulses having the same interpulse timings as the original sequence F. Thus, the processor 46 supplies to the controller 7 a sequence of pulses substantially identical to that which is produced by the flow meter 4 when passing the predetermined flow rate. The datum signals D1, D2,...Dx are supplied by the flow meter 4 to the processor 46 and are used to synchronise the pulses produced by the processor 46. In particular, when the datum pulse D1 is produced, the microprocessor 47 retrieves the measured interpulse time t1 from address 1 in the memory 51 and uses this to generate the correct interpulse interval for the first two pulses of the flow meter cycle. The microprocessor 47 then repeats this operation for the addresses in turn until the second datum signal D2 is received from the flow meter. This causes the microprocessor 47 to select the address in the memory 51 corresponding to the first interpulse interval synchronised with the datum signal D2. This process is repeated for all of the x datum pulses in turn.

When the flow rate actually being measured by the flow meter 4 is very different from the predetermined flow rate, the relative phase between the signals produced by the processor 46 and the flow rate signals supplied by the flow meter 4 is irrelevant and the apparatus of Figure 5 functions in the same way as the apparatus of Figure 1. However, as the stepper controller and motor 5 causes the flow rate through the injector 1 to approach the predetermined flow rate, the cyclically varying output pulses of the processor 46 synchronise with the pulses from the flow meter 4. It is therefore possible for the injector calibration to be performed more quickly and accurately because the cyclic variations in the pulses from the flow meter 4 have less effect on the accuracy and tolerance of the adjustment. The end of the injector calibration procedure may be determined when the phase difference between the reference signal supplied by the processor 46 and the output pulses from the flow meter 4 is less than a predetermined tolerance such as a predetermined number of microseconds.

It is thus possible to provide a calibration technique which may be used to calibrate any flow control device which is capable of calibration adjustment. A specific application, as described hereinbefore, is to the calibration of fuel injectors, such as petrol injectors, at a calibration station at the end of a production line. This technique permits a substantial increase in the speed of calibration so that, for a given number of calibration stations, the speed of production may be increased or, for a given speed of production, the number of calibration stations may be reduced. It is therefore possible to reduce the cost of manufacturing flow control devices such as petrol injectors.

## Claims

1. An apparatus for controlling calibration of a flow control device (1) by a flow meter (4) for supplying an output signal which represents the flow rate of the device (1) and a flow rate adjuster (8, 9) driven by a motor (5), characterised in that the apparatus comprises a reference signal generator (12, 46-51) for generating a reference signal corresponding to the output signal of the flow meter (4) for a predetermined flow rate, a comparator (11) for providing an error signal which is substantially equal to the difference between the reference signal and the flow meter output signal, and a driver (17) for driving the motor (5) at a speed which is a function of the error signal.

2. An apparatus as claimed in Claim 1, characterised in that the motor (5) is a stepper motor and the driver (17) is arranged to drive the stepper motor at a frequency which is a function of the error signal.

3. An apparatus as claimed in Claim 2, characterised in that: the frequency of the flow meter output signal represents the flow rate of the device (1); the reference signal has a frequency substantially equal to the frequency of the output signal of the flow meter (4) for the predetermined flow rate; the comparator (11) comprises a frequency differencer and the error signal has a frequency substantially equal to the difference between the frequency of the reference signal and the frequency of the flow meter output signal; and the driver (17) is arranged to drive the stepper motor (5) at a frequency which is a function of the frequency of the error signal.

4. An apparatus as claimed in Claim 3, characterised in that the driver (17) is arranged to drive the stepper motor (5) at a frequency which is proportional to the frequency of the error signal.

5. An apparatus as claimed in Claim 4, characterised in that the constant of proportionality is selectable.

6. An apparatus as claimed in Claim 5, characterised in that the driver (17) includes a frequency divider (13) whose division ratio is selectable.

7. An apparatus as claimed in any one of Claims 3 to 6, characterised in that the frequency differencer (11) comprises a phase sensitive detector.

8. An apparatus as claimed in Claim 7, characterised in that the phase sensitive detector (11) comprises a D-type bistable circuit.

9. An apparatus as claimed in any one of Claims 3 to 8, characterised by a frequency comparator (18-25) for comparing the frequency of the flow meter output signal and the frequency of the reference signal so as to supply a motor direction signal to the driver (17).

10. An apparatus as claimed in Claim 9, characterised in that the frequency comparator (18-25) comprises a clock (24), first and second counters (20, 23) having clock inputs connected to the clock (24) and being arranged to be gated by the flow meter output signal and the reference signal, respectively, and a digital comparator (25) for comparing the contents of the first and second counters (20, 23).

11. An apparatus as claimed in any one of Claims 3 to 10, characterised in that the reference signal generator (46-51) comprises a memory (51) for storing values representing interpulse periods of the flow meter output signal and a sequence of pulses having the interpulse periods.

12. An apparatus as claimed in Claim 11, characterised in that the pulse generator comprises a microprocessor (47) and a further clock (48).

13. An apparatus for calibrating a flow control device (1), characterised by an apparatus as claimed in any one of the preceding claims, a flow meter (4) for supplying an output signal which represents the flow rate of the device (1), and a flow rate adjuster (8, 9) driven by a motor (5).
